# EUROPEAN PATENT APPLICATION

(11) **EP 3 385 999 A1**
(43) Date of publication of application: **10.10.2018**
(21) Application number: 17165616.8
(22) Date of filing: 07.04.2017
(51) Int. Cl.: H01M 2/10, H01M 2/20

(54) **CURRENT COLLECTING BOARD AND POWER BATTERY ASSEMBLY USING SAME**

(71) Applicant: Optimum Battery Co., Ltd., Shenzhen City, Guangdong 518118 (CN)
(72) Inventor: Zeng, Yu ming, Shenzhen, Guangdong 518118 (CN); Tao, Jiang Song, Shenzhen, Guangdong 518118 (CN); Wen, Ming, Shenzhen, Guangdong 518118 (CN); Li, Yao, Shenzhen, Guangdong 518118 (CN)
(74) Representative: Greaves Brewster LLP

(57) **Abstract**

A power battery assembly includes a number of single batteries having a first end and a second end connecting poles respectively, a number of printed circuit boards, a current collecting board, an anode electrode board, and a cathode electrode board. The single batteries are arranged in a first half and a second half. The first end of the single battery of the first half is opposite to the first end of the single battery of the second half. The first half comprises several first groups; the second half comprises several second groups, each second group is neighbor to another second group and each second group is at one side of a first group. Each printed circuit board is positioned between two neighbored first middle groups and two neighbored second group. The anode electrode board and the cathode electrode board and is positioned at the same side of the power battery assembly, the current collecting board is positioned opposite to the anode electrode board and the cathode electrode board and connects the first groups and the second groups in series.

## Description

### BACKGROUND OF THE INVENTION

### Field of the Invention

This invention relates to power battery assemblies, and more particular, to a current collecting board and a power battery assembly using the current collecting board.

### Description of the Related Art

Lithium iron phosphate batteries have being rapidly developed in recent years. The lithium iron phosphate batteries are widely employed as powers for vehicles such as cars and buses.

In order to provide a desirable output voltage and output current, a power battery pack employed in a vehicle usually includes a number of single lithium iron phosphate batteries. Generally, a traditional power battery pack includes a number of power battery assemblies connected in series. Each power battery assembly can be arranged in such an arrangements, which all of the single batteries of the power battery assembly are arranged in a number of parallel groups, and the parallel groups are further connected in series. Each of the parallel groups includes a number of single batteries connected in parallel. The parallel groups of the power battery assembly includes two side parallel groups. Rest parallel groups are positioned between the two side parallel groups. The power battery assembly also includes a number of printed circuit boards (PCB) and two electrode boards. Each PCB is positioned between two neighbored parallel groups and defines a number of through holes. One end (for example the anode of the single battery) of each single battery is connected with a screw, and the other end (for example the cathode of the single battery) of the single battery is connected with a nut. The screw of the single battery of one parallel group passes through a respective through hole and electrically connected to a PCB. Two single batteries of two neighbored parallel groups are connected with each other in series by the screw engaging with the nut. The electrode boards are usually made of copper and includes an anode electrode board and a cathode electrode board and both define through holes corresponding to the through holes of the PCB. The anodes of the single batteries of one side parallel group are fixed in the through holes of the anode electrode board and electrically connected to the anode electrode board. The cathodes of the single batteries of the other side parallel group are fixed in the through holes of the cathode electrode board and electrically connected to the cathode electrode board. The anode electrode board and the cathode electrode board are severed as the anode and the cathode of the power battery assembly for connecting to another power battery assembly in series. However, the anode electrode board and the cathode electrode board are positioned at two opposite sides of the power battery assembly, it is inconvenient to connect the cathode electrode board or the anode electrode board of another power battery assembly in series. In addition, it increase height of the power battery pack.

It is desirable to provide an invention, which can overcome the problems and limitations mentioned above.

### SUMMARY OF THE INVENTION

The present invention is directed to a current collecting board and a power battery assembly that substantially obviates one or more of the problems due to limitations and disadvantages of the related art.

In an aspect of the present invention, there is provided a current collecting board, comprising: a copper plate comprising a top surface and a bottom surface and defining a number of first mounting holes and a number of first via holes; a first adhesive layer defines a number of second mounting holes and a number of second via holes; a first copper foil comprising a first main portion, a number of contact portions and a number of fusing arms, the first main portion defining a number of third via holes and a number of first isolate holes; each first isolate hole surrounding a respective contact portion and each contact portion defining a third mounting hole; each fusing arm connecting a respective first contact portion and the first main portion; a first dielectric layer defining a number of fourth mounting holes and a number of fourth via holes; an epoxy resin layer comprising a number of insulating members, each insulating member being received in a respective first mounting hole and defining a fifth mounting hole; a second adhesive layer defining a number of six mounting holes and a number of fifth via holes; a second copper foil comprising a second main portion and a number of contact plates, the second main portion defining a number of sixth via holes and a number of second isolate holes; each contact plate being received in a respective second isolate hole and separated from the second main portion by the second adhesive layer, each contact plate defining a seventh mounting hole; and a second dielectric layer defining a number of eighth mounting holes and a number of seventh via holes; wherein the first adhesive layer is adhered to the top surface, each second mounting hole corresponds to a respective first mounting hole, each second via hole corresponds to a first via hole; the first copper foil is adhered to the first adhesive layer, each third mounting hole corresponds to the second mounting hole, each third via hole corresponds to a second via hole; the first dielectric layer is coated on the first copper foil, each fourth mounting hole corresponds to the third mounting hole, each fourth via hole corresponds to a third via hole; each insulating member is received in a respective first mounting hole, each fifth mounting hole corresponds to a second mounting hole; the second adhesive layer is adhered to the bottom surface, each sixth mounting hole corresponds to a fifth mounting hole, each fifth via hole corresponds to a first via hole; the second copper foil is adhered to the second adhesive layer, each seventh mounting hole corresponds to the sixth mounting hole, each sixth via hole correspond to a fifth via hole; the second dielectric layer is coated on the second copper foil, each eight mounting hole corresponds to the seventh mounting hole, each seventh via hole corresponds to a sixth via hole.

In another aspect of the present invention, there is provided a power battery assembly, including a number of single batteries having a first end and a second end connected with connecting poles respectively, a number of printed circuit boards, a current collecting board, an anode electrode board, and a cathode electrode board; wherein the single batteries are arranged in a first half and a second half; the first end of the single battery of the first half is opposite to the first end of the single battery of the second half; the first half comprises several first groups, each first group is neighbor to another first group; the first groups comprises a first front group, a first rear group, and many first middle groups positioned between the first front group and the first rear group; the second half comprises several second groups, each second group is neighbor to another second group and each second group is at one side of a first group; the second groups comprises a second front group, a second rear group, and many second middle groups positioned between the second front group and the second rear group; wherein each printed circuit board is positioned between two neighbored first middle groups and two neighbored second groups, each connecting pole of the first end of the single battery in the first front group is electrically connected to the anode electrode board, each connecting pole of the second end of the single battery in the first front group is electrically connected a printed circuit board; each connecting pole of the second end of the single battery in the second front group is electrically connected to the cathode electrode board, each connecting pole of the first end of the single battery in the second front group is electrically connected the printed circuit board which the first front group connected to; each connecting pole of the second end of the single battery in the first rear group is electrically connected to the current collecting board, each connecting pole of the first end of the single battery in the first rear group is electrically connected another printed circuit board; each connecting pole of the first end of the single battery in the second rear group is electrically connected to the current collecting board, each connecting pole of the second end of the single battery in the second rear group is electrically connected the another printed circuit board; wherein connecting poles of each single battery in each first middle group are electrically connected to two printed circuit boards and connected to connecting poles of the single battery of neighbored first middle groups in series; connecting poles of each single battery in each second middle group are electrically connected to two printed circuit boards and connected to connecting poles of the single battery of neighbored second middle groups in series; the anode electrode board and the cathode electrode board are positioned at the same side of the power battery assembly, the current collecting board is positioned opposite to the anode electrode board and the cathode electrode board and connects the first groups and the second groups in series.

It is to be understood that both the foregoing general description and the following detailed description are exemplary and explanatory and are intended to provide further explanations of the invention as claimed.

### BRIEF DESCRIPTION OF THE DRAWINGS

FIG. 1 is an isometric, schematic view of a power battery assembly, according to an embodiment.
FIG. 2 is an isometric, schematic view of the power battery assembly of FIG. 1, viewed from another angle.
FIG. 3 is a bottom view of the power battery assembly of FIG. 1.
FIG. 4 is a front view of a printed circuit board of the power battery assembly of FIG. 1.
FIG. 5 is a back view of the printed circuit board of FIG 4.
FIG. 6 is a front view of a current collecting board of the power battery assembly of FIG. 1.
FIG. 7 is a back view of the current collecting board of FIG 6 of the power battery pack of FIG. 1.
FIG. 8 is an exploded view of the current collecting board of FIG 6.
FIG. 9 is a front view of a copper plate of the current collecting board of FIG. 8.
FIG. 10 is a front view of a first adhesive layer of the current collecting board of FIG. 8.
FIG. 11 is a front view of a first copper foil of the current collecting board of FIG. 8.
FIG. 12 is a front view of a first dielectric layer of the current collecting board of FIG. 8.
FIG. 13 is a front view of an epoxy resin layer of the current collecting board of FIG. 8.
FIG. 14 a front view of a second adhesive of the current collecting board of FIG. 8.
FIG. 15 is a front view of a second copper foil of the current collecting board of FIG. 8.
FIG. 16 is a front view of a second dielectric layer of the current collecting board of FIG. 8.
FIG. 17 is a partially view of the copper plate of the current collecting board of FIG. 9.
FIG. 18 is a partially view of the first adhesive layer of the current collecting board of FIG. 10.
FIG. 19 is a partially view of the first copper foil of the current collecting board of FIG. 11.
FIG. 20 is a partially view of the first dielectric layer of the current collecting board of FIG. 12.
FIG. 21 is a partially view of the epoxy resin layer of the current collecting board of FIG. 13.
FIG. 22 is a partially view of the second adhesive of the current collecting board of FIG. 14.
FIG. 23 is a partially view of the second copper foil of the current collecting board of FIG. 15.
FIG. 24 is a partially view of the second dielectric layer of the current collecting board of FIG. 16.

### DETAILED DESCRIPTION OF THE PREFERRED EMBODIMENTS

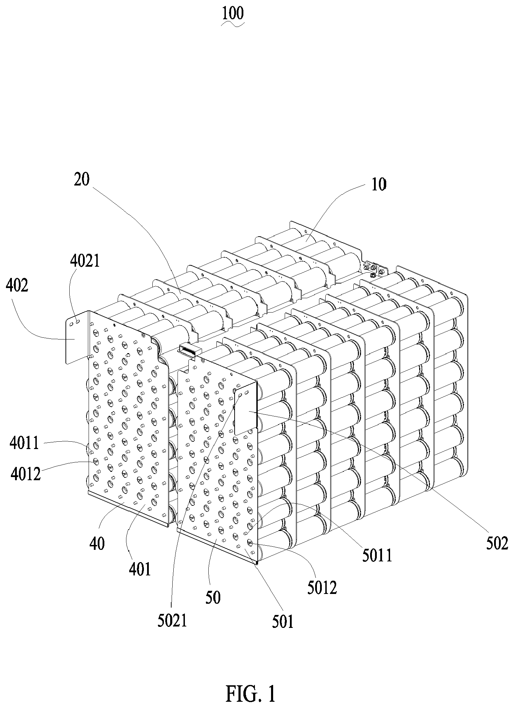

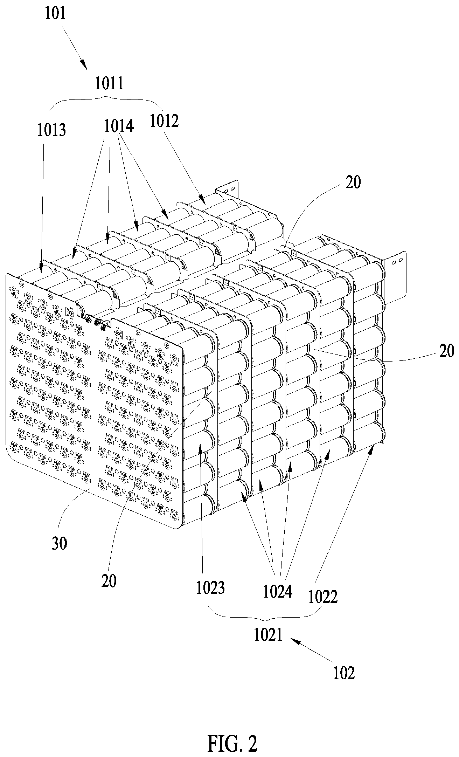

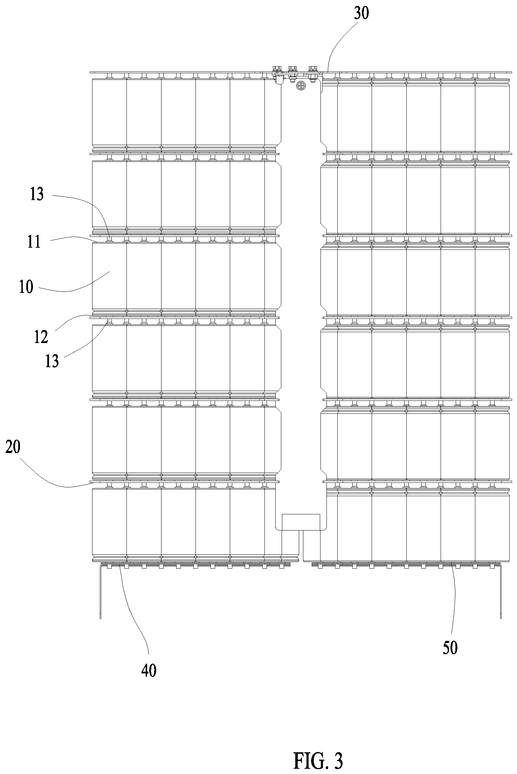

Referring to FIG. 1 to FIG. 3, a power battery assembly 100, according to a preferred embodiment, includes a number of single batteries 10, a number of printed circuit boards (PCB) 20, a current collecting board 30, an anode electrode board 40, and a cathode electrode board 50.

Each single battery 10 is a lithium iron phosphate battery. The single battery 10 is cylindrical and includes a first end 11 and a second end 12 opposite to the first end 11. In the embodiment, the first end 11 is the anode of the single battery, the second end 12 is the cathode of the single battery 10. Each single battery further includes two connecting poles 13 respectively connected to the first end 11 and the second end 12 by soldering. The connecting pole 13 can be a screw or a nut.

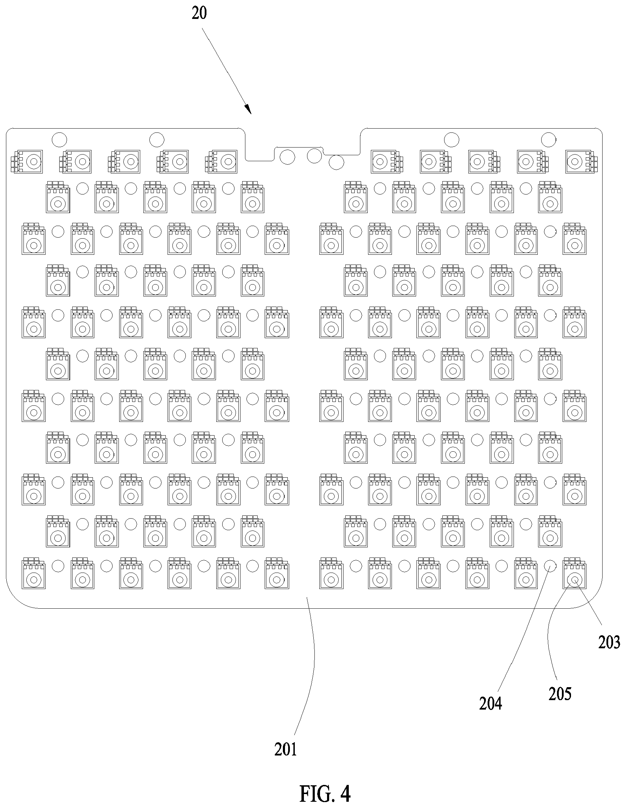

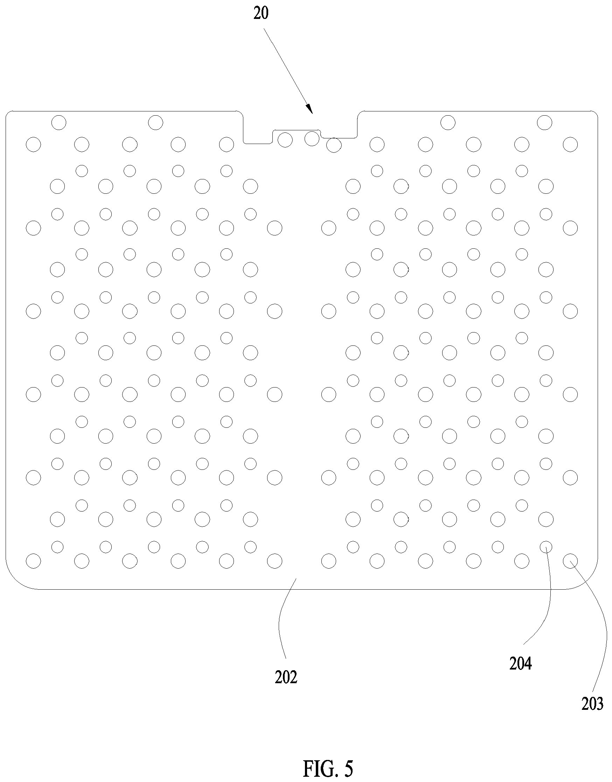

Referring to FIG. 4 and FIG. 5, each PCB 20 is generally rectangular and includes a front surface 201 and a rear surface 202. The PCB 20 defines a number of connecting holes 203 and heat dissipating holes 204 passing through the front surface 201 and the rear surface 202. The PCB 20 includes a number of conductive portions 205 on the front surface 201. The connecting holes 203 and the heat dissipating holes 204 are both arranged in rows. Each row of the connecting holes 203 is at one side of a corresponding row of heat dissipating holes 204. Each conductive portion 205 is in an annular shape and surrounds a respective connecting hole 203. The conductive portions 205 are made of metal such as copper and electrically connects with each other via wires embedded in the PCB 20.

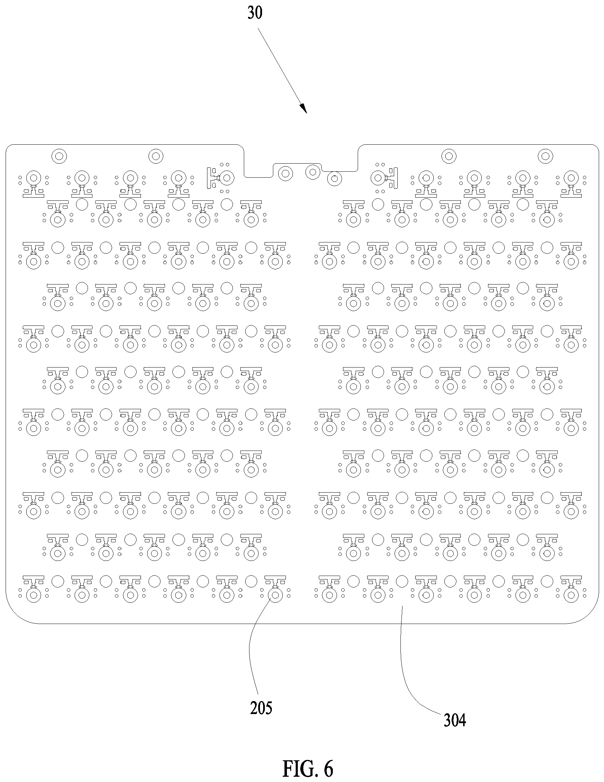

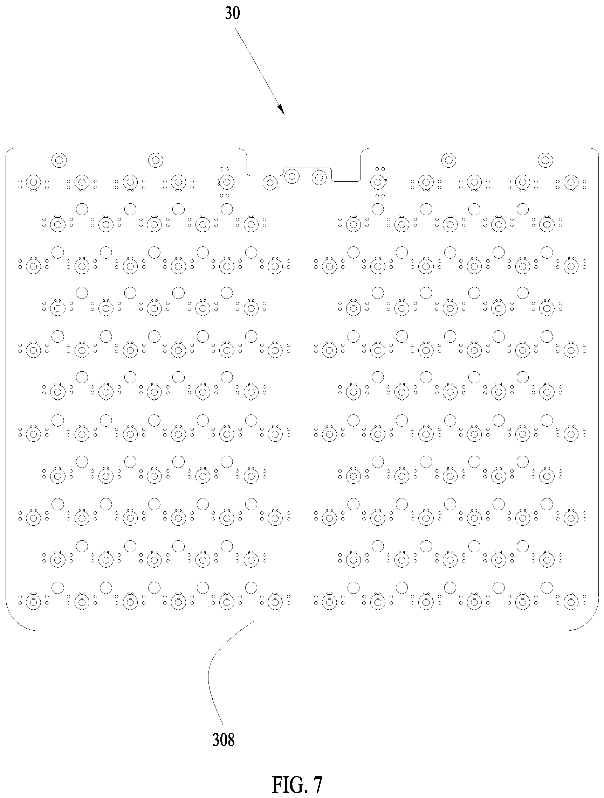

Referring to FIG. 6 to FIG. 8, the current collecting board 30 includes a copper plate 301, a first adhesive layer 302, a first copper foil 303, a first dielectric layer 304, an epoxy resin layer 305, a second adhesive layer 306, a second copper foil 307, and a second dielectric layer 308.

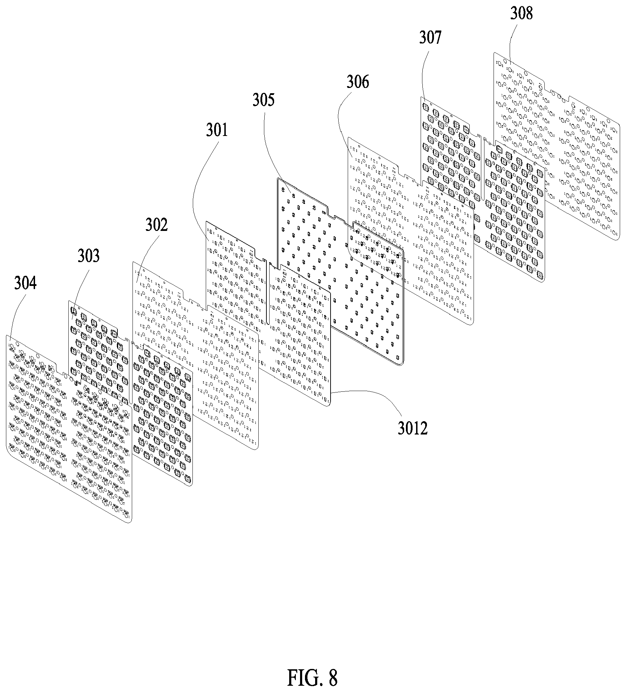

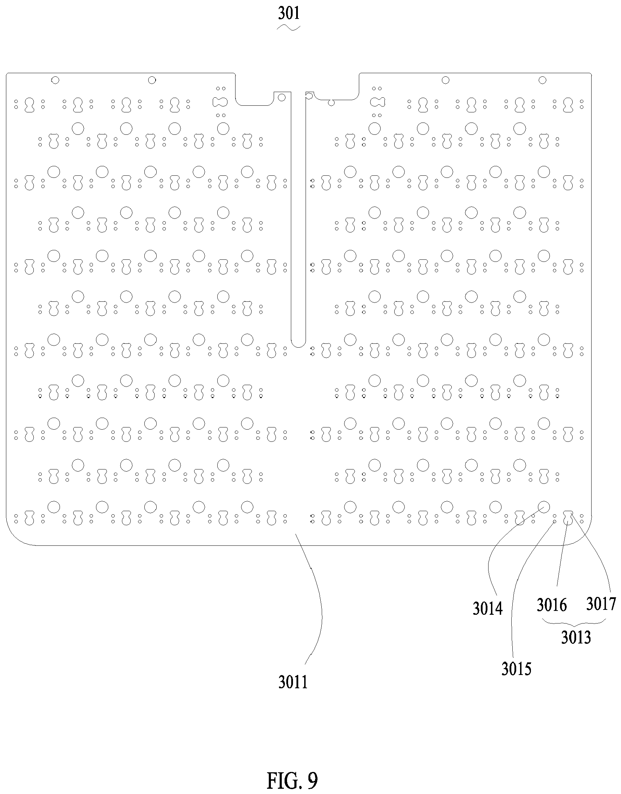

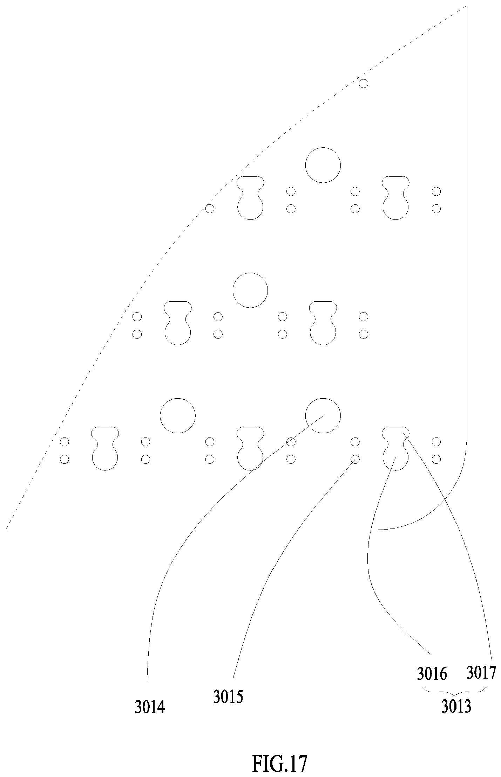

Referring to FIG. 8, FIG. 9 and 17, the copper plate 301 is generally rectangular and includes a top surface 3011 and a bottom surface 3012 opposite to the top surface 3011. The copper plate 301 defines a number of first mounting holes 3013, a number of first heat dissipation holes 3014, and a number of first via holes 3015 passing through the top surface 3011 and the bottom surface 3012. The first mounting holes 3013 are arranged in matrix and each first mounting hole 3013 includes a first part 3016 and a second part 3017. The first part 3016 is circular. The second part 3017 is generally rectangular and communicated with the first part 3016. The first heat dissipation holes 3014 are arranged in matrix and each first heat dissipation hole 3014 is circular. The first via holes 3015 are arranged in matrix and every two pairs of first via holes 3015 are positioned at two sides of each first mounting hole 3013. Each first mounting hole 3014 corresponds to a connecting hole 203. Each first heat dissipation hole 3014 corresponds a heat dissipating hole 204.

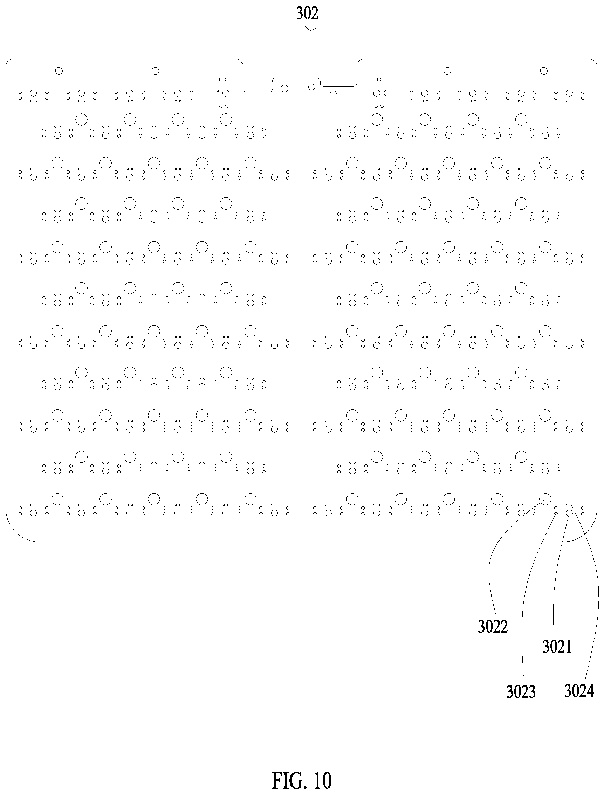

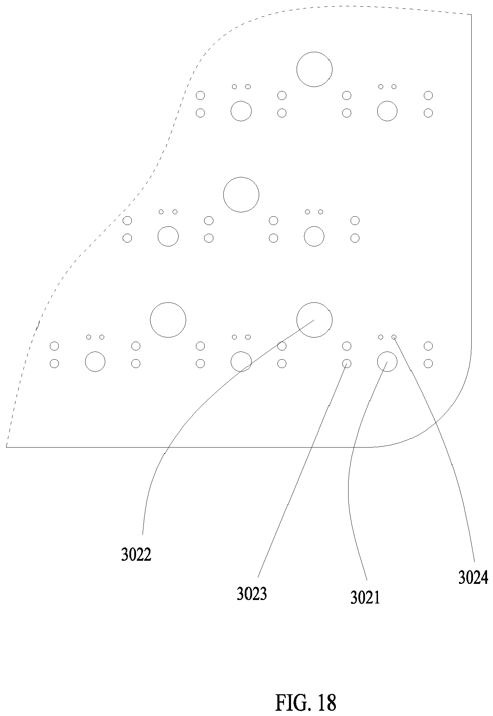

Referring to FIG. 8 FIG. 10, and FIG. 18, the first adhesive layer 302 is made of polypropylene. The first adhesive layer 302 is generally rectangular and adhered to the top surface 3011 of the copper plate 301. The first adhesive layer 302 defines a number of second mounting holes 3021, a number of second heat dissipation holes 3022, a number of second via holes 3023, and a number of first through holes 3024 passing through the first adhesive layer 302. The second mounting holes 3021 are arranged in matrix and each second mounting hole 3021 is circular and corresponds to the first part 3016 of a respective first mounting hole 3013. The second heat dissipation holes 3022 are arranged in matrix and each second heat dissipation hole 3022 is circular and corresponds to a respective first heat dissipation hole 3014. The second via holes 3023 are arranged in matrix and every two pairs of second via holes 3023 are positioned at two sides of each second mounting hole 3021. Each second via hole 3023 corresponds to a first via hole 3015. The first through holes 3024 are arranged in matrix and every two first through holes 3024 are positioned at one side of each second mounting hole 3021.

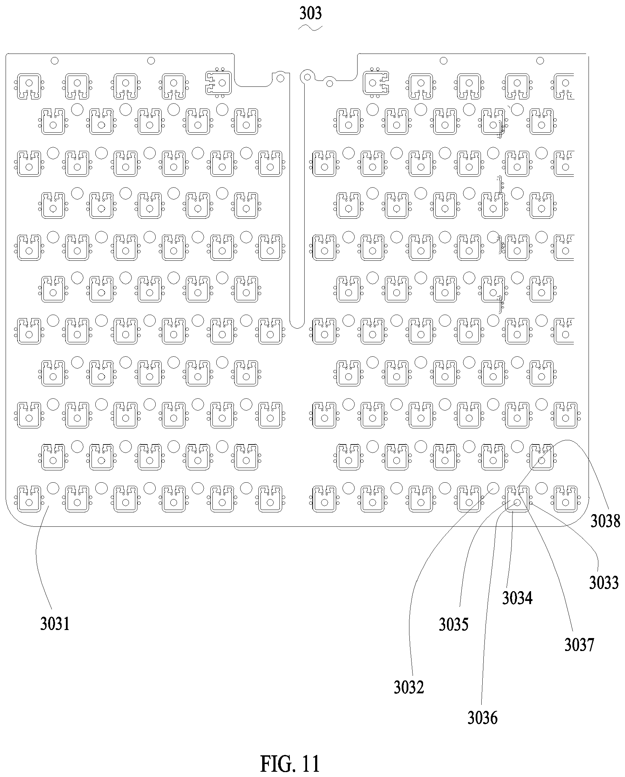

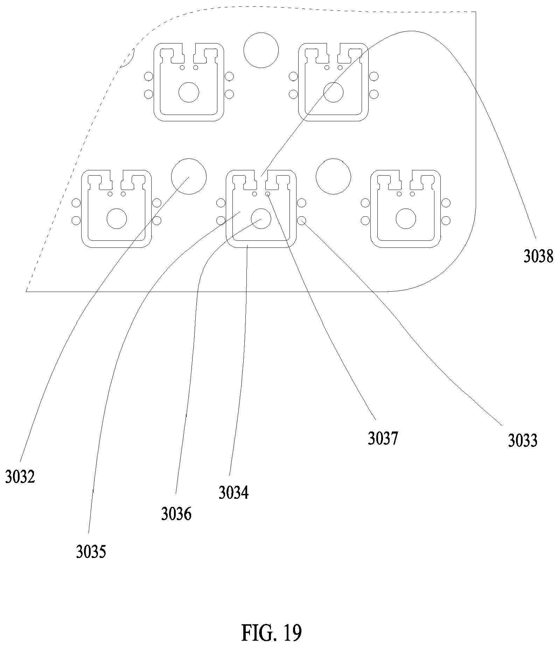

Referring to FIG. 8, FIG. 11, and FIG. 19, the first copper foil 303 is generally rectangular and adhered to the first adhesive layer 302. The first copper foil 303 is opposite to the copper plate 301. The first copper foil 303 includes a first main portion 3031. The first main portion 3031 defines a number of third heat dissipation holes 3032, a number of third via holes 3033, and a number of first isolate holes 3034 passing through the first main portion 3031. The third heat dissipation holes 3032 are arranged in matrix and each third heat dissipation hole 3032 is circular and corresponds to a respective second heat dissipation hole 3022. Each first isolate hole 3034 is generally in a discontinuous annular shape. The first copper foil 303 further includes a number of contact portions 3035. Each first isolate hole 3034 surrounds a respective contact portion 3035. Each contact portion 3035 is rectangular and defines a third mounting hole 3036 and a pair of second through holes 3037. Each third mounting hole 3036 is circular and corresponds to the second mounting hole 3021. The third via holes 3033 are arranged in matrix and every two pairs of third via holes 3033 are positioned at two sides of each first isolate hole 3034. Each third via hole 3033 corresponds to a second via hole 3023. Each second through hole 3037 corresponds to a first through hole 3024. The first copper foil 303 further includes a number of fusing arms 3038. Each fusing arm 3038 connects a respective first contact portion 3035 and the first main portion 3031. A width of the fusing arm 3038 is smaller than a width of the first contact portion 3035. In the embodiment, the first main portion 3031, the first contact portions 3035, and the fusing arms 3038 are integrated formed.

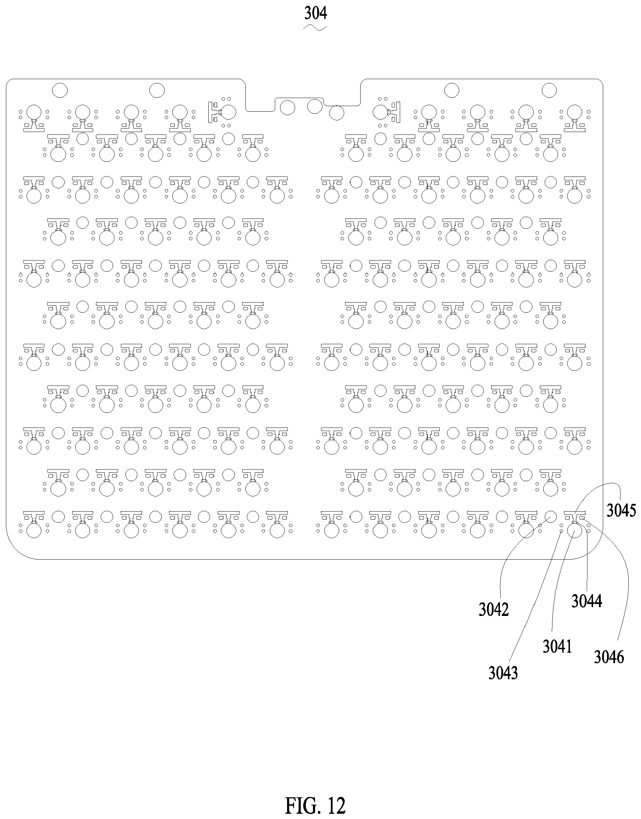

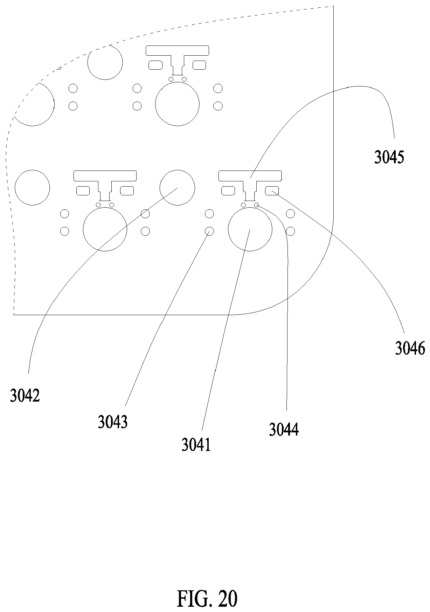

Referring to FIG. 8, FIG. 12, and FIG. 20, the first dielectric layer 304 is made of ink and coated on the first copper foil 303. The first dielectric layer 304 is opposite to the first adhesive layer 302 and defines a number of fourth mounting holes 3041, a number of fourth heat dissipation holes 3042, a number of fourth via holes 3043, a number of third through holes 3044, a number of first exposing holes 3045, and a number of second exposing holes 3046 passing through the first dielectric layer 304. The fourth mounting holes 3041 are arranged in matrix and each fourth mounting hole 3041 is circular and corresponds to the third mounting hole 3036. The fourth heat dissipation holes 3042 are arranged in matrix and each fourth heat dissipation hole 3042 is circular and corresponds to a respective third heat dissipation hole 3032. The fourth via holes 3043 are arranged in matrix and every two pairs of fourth via holes 3043 are positioned at two sides of each fourth mounting hole 3041. Each fourth via hole 3043 corresponds to a third via hole 3033. The third through holes 3044 are arranged in matrix and every two third through holes 3044 are positioned at one side of each fourth mounting hole 3041. Each third through hole 3044 corresponds to a second through hole 3037. Each first exposing hole 3045 corresponds to a respective fusing arm 3038, namely each fusing arm 3038 is exposed outside through a respective first exposing hole 3045. Every two second exposing holes 3046 are positioned at two sides of each first exposing hole 3045. The every two second exposing holes 3046 correspond to a part of a respective contact portion 3035, namely each contact portion 3035 is partly exposed outside through the every two second exposing hole 3046. A size of fourth mounting holes 3041 is greater than a size of the third mounting hole 3036 and each contact portion 3035 is also partly exposed outside through a respective fourth mounting hole 3041.

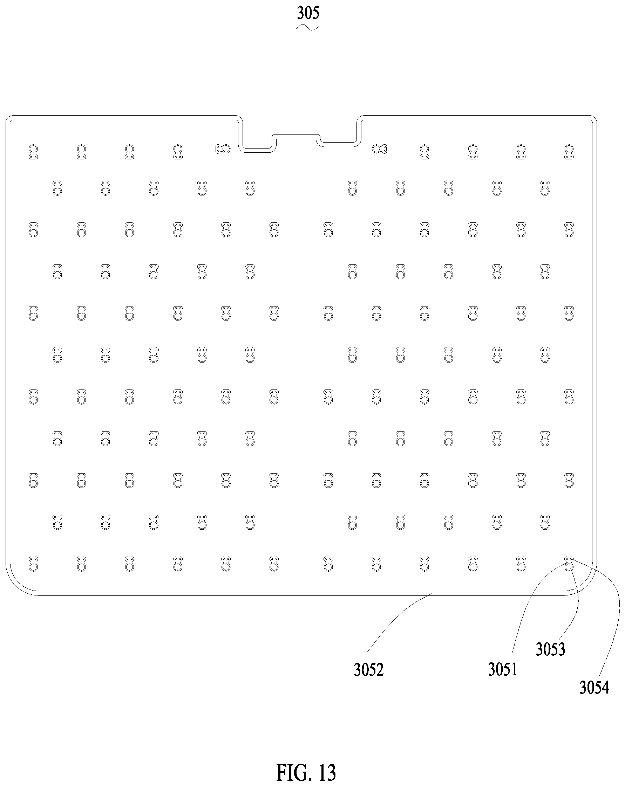

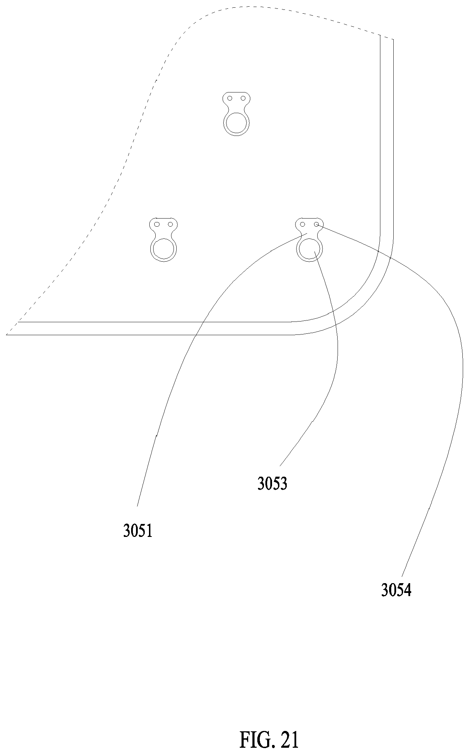

Referring to FIG. 8, FIG. 13 and FIG. 21, the epoxy resin layer 305 includes a number of insulating members 3051 and an annular frame 3052 surrounding the insulating members 3051. A shape of each insulating member 3051 is the same as the first mounting hole 3013. Each insulating member 3051 is received in a respective first mounting hole 3013 and defines a fifth mounting hole 3053 corresponding to a first part 3016 of the first mounting hole 3013 and a pair of fourth through hole 3054 corresponding to the second part 3017 of the first mounting hole 3013. Each fifth mounting hole 3053 is circular and also corresponds to a second mounting hole 3021. Each fourth through hole 3054 is circular and corresponds to a first through hole 3024. The annular frame 3052 is coated on the bottom surface 3012 of the copper plate 301. In alternative embodiments, the annular frame 3052 can be omitted.

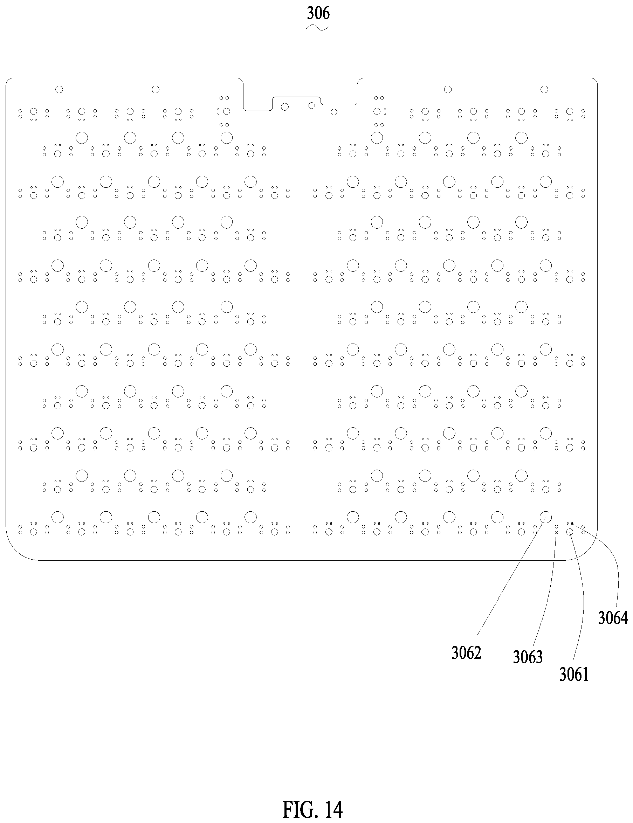

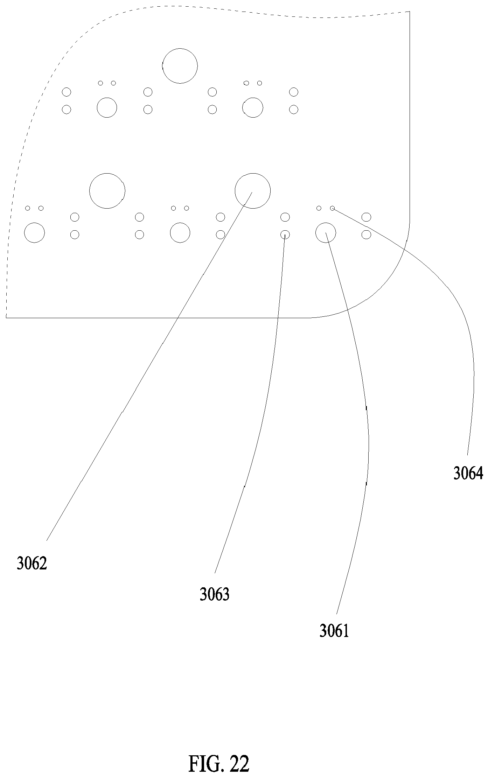

Referring to FIG. 8, FIG. 14 and FIG. 22, the second adhesive layer 306 is made of polypropylene. The second adhesive layer 306 is generally rectangular and adhered to the bottom surface 3012 of the copper plate 301. The second adhesive layer 306 is surrounded by the annular frame 3052 and defines a number of six mounting holes 3061, a number of sixth heat dissipation holes 3062, a number of fifth via holes 3063, and a number of fifth through holes 3064 passing through the second adhesive layer 306. The sixth mounting holes 3061 are arranged in matrix and each sixth mounting hole 3061 is circular and corresponds to a fifth mounting hole 3053. The fifth heat dissipation holes 3062 are arranged in matrix and each fifth heat dissipation hole 3062 is circular and corresponds to a respective first heat dissipation hole 3014. The fifth via holes 3063 are arranged in matrix and every two pairs of fifth via holes 3063 are positioned at two sides of each sixth mounting hole 3061. Each fifth via hole 3063 corresponds to a first via hole 3015. The fifth through holes 3064 are arranged in matrix and every two fifth through holes 3064 are positioned at one side of each sixth mounting hole 3061. Each fifth through hole 3064 corresponds to a fourth through hole 3054.

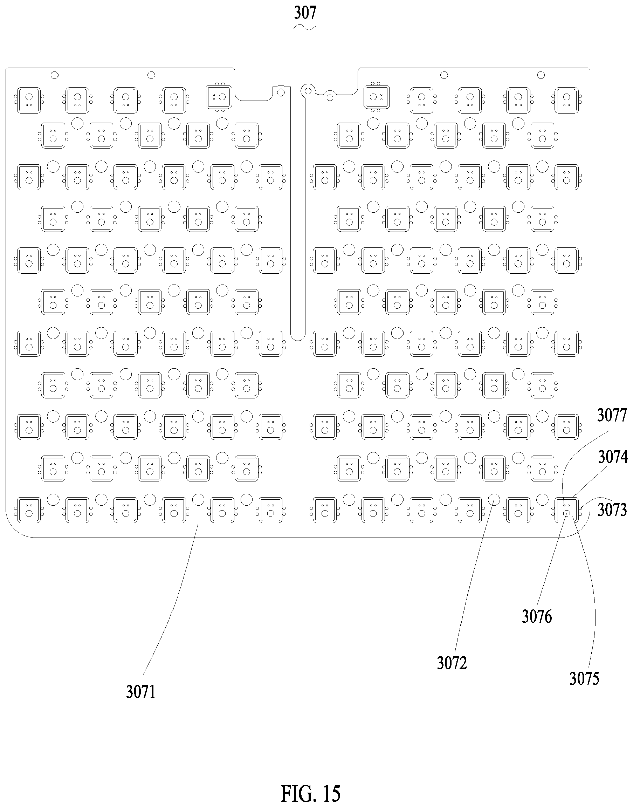

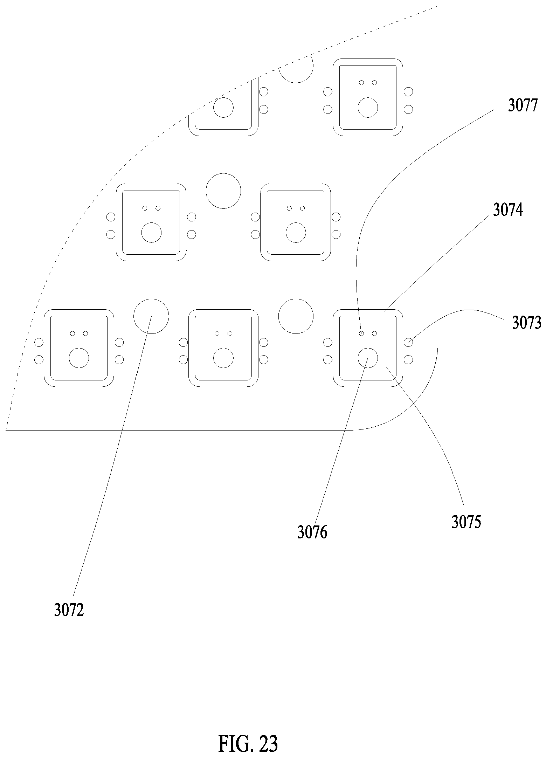

Referring to FIG. 8, FIG.15 and FIG. 23, the second copper foil 307 is generally rectangular and adhered to the second adhesive layer 306. The second copper foil 307 is opposite to the copper plate 301. The second copper foil 307 includes a second main portion 3071. The second main portion 3071 defines a number of sixth heat dissipation holes 3072, a number of sixth via holes 3073, and a number of second isolate holes 3074 passing through the second main portion 3071. The sixth heat dissipation holes 3072 are arranged in matrix and each sixth heat dissipation hole 3072 is circular and corresponds to a respective fifth heat dissipation hole 3062. Each second isolate hole 3074 is generally in a square shape. The second copper foil 307 further includes a number of contact plates 3075. Each contact plate 3075 is received in a respective second isolate hole 3074 and separated from the second main portion 3071 by the second adhesive layer 306. Each contact plate 3075 is generally square and defines a seventh mounting hole 3076 and a pair of sixth through holes 3077. Each seventh mounting hole 3076 is circular and corresponds to the sixth mounting hole 3061. The sixth via holes 3073 are arranged in matrix and every two pairs of sixth via holes 3073 are positioned at two sides of each second isolate hole 3074. Each sixth via hole 3073 corresponds to a fifth via hole 3063. Each sixth through hole 3077 corresponds to a fifth through hole 3064.

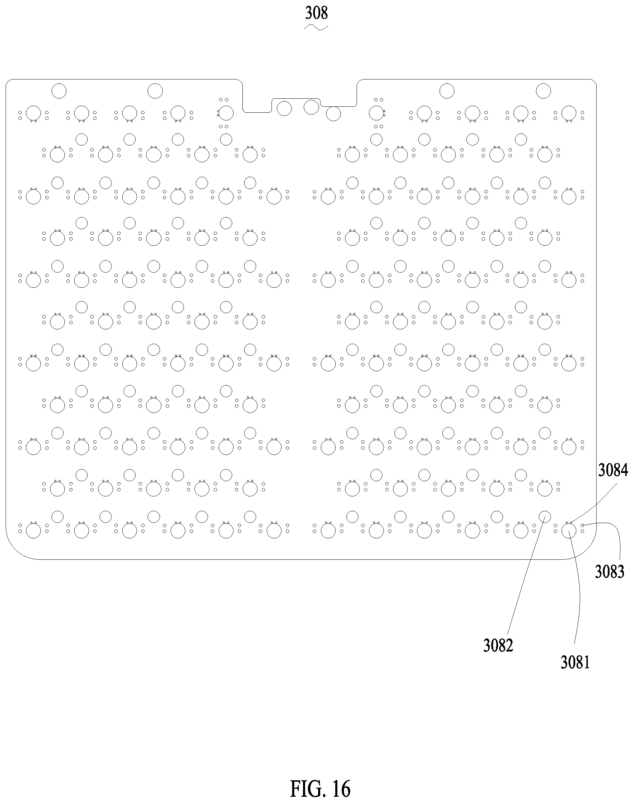

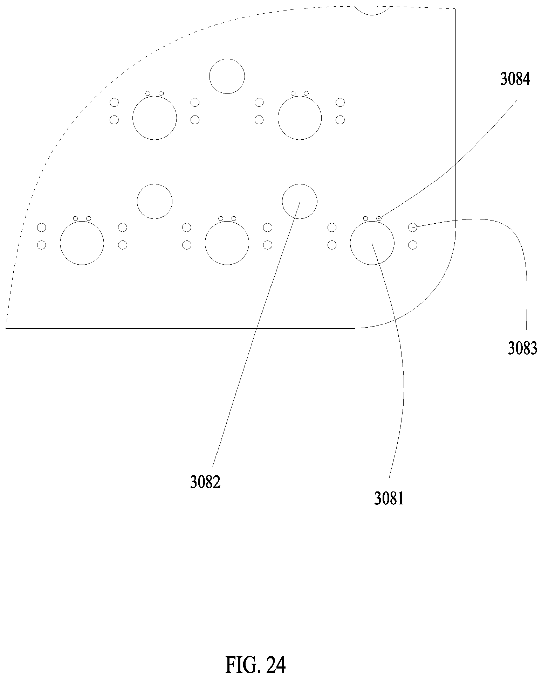

Referring to FIG. 8, FIG.16, and FIG. 24, the second dielectric layer 308 is made of ink and coated on the second copper foil 307. The second dielectric layer 308 is opposite to the second adhesive layer 306 and defines a number of eighth mounting holes 3081, a number of a number of seven heat dissipation holes 3082, a number of seventh via holes 3083, and a number of seventh through holes 3084. The eighth mounting holes 3081 are arranged in matrix and each eight mounting hole 3081 is circular and corresponds to the seventh mounting hole 3076. The seventh heat dissipation holes 3082 are arranged in matrix and each seventh heat dissipation hole 3082 is circular and corresponds to a respective sixth heat dissipation hole 3072. The seventh via holes 3083 are arranged in matrix and every two pairs of seventh via holes 3083 are positioned at two sides of each eighth mounting hole 3081. Each seventh via hole 3083 corresponds to a sixth via hole 3073. The seventh through holes 3084 are arranged in matrix and every two seventh through holes 3084 are positioned at one side of each eighth mounting hole 3081. Each seventh through hole 3084 corresponds to the sixth through hole 3077.

Referring to FIG. 1, the anode electrode board 40 is made of metal such as copper or nickel. In the embodiment, the anode electrode board 40 is made of copper. The anode electrode board 40 includes a first substrate portion 401 generally in a rectangular shape and a first ear portion 402 extending from one side of the first substrate portion 401. In the embodiment, the anode electrode board 40 defines a number of first fixing holes 4011 and a number of first air passing holes 4012 passing through the first substrate portion 401. The first ear portion 402 is perpendicular to the first substrate portion 401 and defines two first assembling holes 4021. The number of the first fixing holes 4011 is half of the number of connecting holes 203. The first fixing holes 4011 are arranged in matrix and each first fixing hole 4011 corresponds a connecting hole 203. The number of the first air passing holes 4012 is half of the number of the heat dissipating holes 204. The first air passing holes 4021 are arranged in matrix and each first air passing hole 4021 corresponds a heat dissipating hole 204.

The cathode electrode board 50 is made of metal such as copper or nickel. In the embodiment, the cathode electrode board 50 is made of copper and has the same structure as the anode electrode board 40. The cathode electrode board 50 includes a second substrate portion 501 generally in a rectangular shape and a second ear portion 502 extending from one side of the second substrate portion 501. In the embodiment, the cathode electrode board 50 defines a number of second fixing holes 5011 and a number of second air passing holes 5012 passing through the second substrate portion 501. The second ear portion 502 is perpendicular to the second substrate portion 501 and defines two second assembling holes 5021. The number of the second fixing holes 5011 is half of the number of the connecting holes 203. The second fixing holes 5011 are arranged in matrix and each second fixing hole 5011 corresponds a connecting hole 203. The number of the second air passing holes 5012 is half of the number of the heat dissipating holes 204. The second air passing holes 5012 are arranged in matrix and each second air passing hole 5012 corresponds a heat dissipating hole 204.

When manufacturing the current collecting board 30, the first adhesive layer 302 is adhered to the top surface 3011 of the copper plate 301, each second mounting hole 3021 corresponds to the first part 3016 of a respective first mounting hole 3013, each second heat dissipation hole 3022 corresponds to a respective first heat dissipation hole 3014. Each second via hole 3023 corresponds to a first via hole 3015. The first copper foil 303 is adhered to the first adhesive layer 303, each third heat dissipation hole 3032 corresponds to a respective second heat dissipation hole 3022. Each third mounting hole 3036 corresponds to the second mounting hole 3021. Each third via hole 3033 correspond to a second via hole 3023. The first dielectric layer 304 is coated on the first copper foil 303. Each fourth mounting hole 3041 corresponds to the third mounting hole 3036. Each fourth heat dissipation hole 3042 corresponds to a respective third heat dissipation hole 3032. Each fourth via hole 3043 corresponds to a third via hole 3033. Each fusing arm 3038 is exposed outside through a respective first exposing hole 3045. Each contact portion 3035 is partly exposed outside through the every two second exposing holes 3046. Each insulating member 3051 is received in a respective first mounting hole 3013. Each fifth mounting hole 3053 corresponds to a second mounting hole 3021. Each fourth through hole 3054 corresponds to a first through hole 3024. The second adhesive layer 306 is adhered to the bottom surface 3012 of the copper plate 301. Each sixth mounting hole 3061 corresponds to a fifth mounting hole 3053. Each fifth heat dissipation hole 3062 corresponds to a respective first heat dissipation hole 3014. Each fifth via hole 3063 corresponds to a first via hole 3015. Each fifth through hole 3064 corresponds to a fourth through hole 3054. The second copper foil 307 is adhered to the second adhesive layer 306. Each sixth heat dissipation hole 3072 corresponds to a respective fifth heat dissipation hole 3062. Each seventh mounting hole 3076 corresponds to the sixth mounting hole 3061. Each sixth via hole 3073 correspond to a fifth via hole 3063. Each sixth through hole 3077 corresponds to a fifth through hole 3064. The second dielectric layer 308 is coated on the second copper foil 307. Each eight mounting hole 3081 corresponds to the seventh mounting hole 3076. Each seventh heat dissipation hole 3082 corresponds to a respective sixth heat dissipation hole 3072. Each seventh via hole 3083 corresponds to a sixth via hole 3073. Each seventh through hole 3084 corresponds to the sixth through hole 3077.

The copper plate 301 is electrically connected to the first main portion 3031 and the second main portion 3071 by the first via holes 3015, the second via holes 3025, the third via holes 3033, the fourth via holes 3043, the fifth via holes 3063, the sixth via holes 3073, and the seventh via holes 3083. Conductive material is plated in the first via holes 3015, the second via holes 3025, the third via holes 3033, the fourth via holes 3043, the fifth via holes 3063, the sixth via holes 3073, and the seventh via holes 3083.

Each contact potion 3035 is electrically connected to a respective contact plate 3075 by the second mounting holes 3021, the third mounting holes 3034, the fourth mounting holes 3041, the fifth mounting holes 3051, the sixth mounting holes 3061, the seventh mounting holes 3076, and eighth mounting holes 3081. Conductive material is plated in the second mounting holes 3021, the third mounting holes 3036, the fourth mounting holes 3041, the fifth mounting holes 3051, the sixth mounting holes 3061, the seventh mounting holes 3076, and eighth mounting holes 3081. Each contact potion 3035 is also electrically connected to a respective contact plate 3075 by the first through holes 3024, the second through holes 3033, the third through holes 3044, the fourth through holes 3054, the fifth through holes 3064, the sixth through holes 3077, and the seventh through holes 3083. Conductive material is plated in the first through holes 3024, the second through holes 3033, the third through holes 3044, the fourth through holes 3054, the fifth through holes 3064, the sixth through holes 3077, and the seventh through holes 3083. In alternative embodiment, the first through holes 3024, the second through holes 3033, the third through holes 3044, the fourth through holes 3054, the fifth through holes 3064, the sixth through holes 3077, and the seventh through holes 3083 can be omitted.

Referring to FIG. 1 to FIG. 3, when assembling the power battery assembly 100, the single batteries 10 are arranged in a first half 101 and a second 102 parallel to first half 101. The first end 11 of the single battery 10 of the first half 101 is opposite to the first end 11 of the single battery 10 of the second half 102. The first half 101 includes several first groups 1011. Each first group 1011 is neighbor to another first group 1011 and containing the same number of the single batteries 10. The first groups 1011 includes a first front group 1012, a first rear group 1013, and many first middle groups 1014 positioned between the first front group 1012 and the first rear group 1013. The second half 102 includes several second groups 1021. Each second group 1021 is neighbor to another second group 1021 and containing the same number of the single batteries 10 and each second group 1021 is at one side of a first group 1011. The second groups 1021 includes a second front group 1022, a second rear group 1023, and many second middle groups 1024 positioned between the second front group 1022 and the second rear group 1023.

Each PCB 20 is positioned between two neighbored first middle groups 1014 and two neighbored second groups 1024. Each pole 13 of the first end 11 of the single battery 10 in the first front group 1012 is received in a first fixing hole 4011 and electrically connected to the anode electrode board 40, each pole 13 of the second end 12 of the single battery 10 in the first front group 1012 is received in a connecting hole 203 of a PCB 20 and electrically connected the PCB 20 by the conductive portion 205. Each pole 13 of the second end 12 of the single battery 10 in the second front group 1022 is received in a second fixing hole 5011 and electrically connected to the cathode electrode board 50, each pole 13 of the first end 12 of the single battery 10 in the second front group 1022 is received in a connecting hole 203 of the PCB 20 and electrically connected the PCB 20 which the first front group connected to. Each pole 13 of the second end 12 of the single battery 10 in the first rear group 1013 is received in a second mounting hole 3021 to eight mounting hole 3081 and electrically connected to the current collecting board 30, each pole 13 of the first end 11 of the single battery 10 in the first rear group 1013 is received in a connecting hole 203 of another PCB 20 and electrically connected the another PCB 20 by the conductive portion 205. Each pole 13 of the first end 11 of the single battery 10 in the second rear group 1023 is received in a corresponding second mounting hole 3021 to eight mounting hole 3081 and electrically connected to current collecting board 30, each pole 13 of the second end 12 of the single battery 10 in the second rear group 1023 is received in a connecting hole 203 of the other PCB 20 and electrically connected the another PCB 20 by the conductive portion 205.

Poles 13 of each single battery 10 in each first middle group 1014 pass the connecting holes 203 of two PCBs 20 and are electrically connected to two PCBs 20 by the conductive portion 205 and connected to poles 13 of the single battery 10 of neighbored first middle groups 1014 in series. Poles 13 of each single battery 10 in each second middle group 1024 passes the connecting holes 203 of two PCBs 20 by the conductive portion 205 and are electrically connected to the two PCBs 20 and connected to poles 13 of the single battery 10 of neighbored second middle groups 1024 in series. The anode electrode board 40 and the cathode electrode board 50 and is positioned at the same side of the power battery assembly 100, the current collecting board is positioned opposite to the anode electrode board 40 and the cathode electrode board 50 and connects the first groups 1011 and the second groups 1021 in series. The first ear portion 402 and the second ear portion 502 are configured for connecting other power battery assemblies in series.

It will be apparent to those skilled in the art that various modification and variations can be made in the multicolor illumination device and related method of the present invention without departing from the spirit or scope of the invention. Thus, it is intended that the present invention cover modifications and variations that come within the scope of the appended claims and their equivalents.

## Claims

1. A current collecting board (30), comprising:
a copper plate (301) comprising a top surface (3011) and a bottom surface (3012) and defining a number of first mounting holes (3013) and a number of first via holes (3015);
a first adhesive layer (302) defining a number of second mounting holes (3021) and a number of second via holes (3023);
a first copper foil (303) comprising a first main portion (3031), a number of contact portions (3035) and a number of fusing arms (3038), the first main portion (3031) defining a number of third via holes (3033) and a number of first isolate holes (3034); each first isolate hole (3034) surrounding a respective contact portion (3035) and each contact portion (3035) defining a third mounting hole (3036); each fusing arm (3038) connecting a respective first contact portion (3035) and the first main portion (3031);
a first dielectric layer (304) defining a number of fourth mounting holes (3041) and a number of fourth via holes (3043);
an epoxy resin layer (305) comprising a number of insulating members (3051), each insulating member (3051) being received in a respective first mounting hole (3013) and defining a fifth mounting hole (3053);
a second adhesive layer (306) defining a number of six mounting holes (3061) and a number of fifth via holes (3063);
a second copper foil (307) comprising a second main portion (3071) and a number of contact plates (3075), the second main portion (3071) defining a number of sixth via holes (3073) and a number of second isolate holes (3074); each contact plate (3075) being received in a respective second isolate hole (3074) and separated from the second main portion (3071) by the second adhesive layer (306), each contact plate (3075) defining a seventh mounting hole (3076); and
a second dielectric layer (308) defining a number of eighth mounting holes (3081) and a number of seventh via holes (3083);
wherein the first adhesive layer (302) is adhered to the top surface (3011), each second mounting hole (3021) corresponds to a respective first mounting hole (3013), each second via hole (3023) corresponds to a first via hole (3015); the first copper foil (303) is adhered to the first adhesive layer (302), each third mounting hole (3036) corresponds to the second mounting hole (3021), each third via hole (3033) corresponds to a second via hole (3023); the first dielectric layer (304) is coated on the first copper foil (303), each fourth mounting hole (3041) corresponds to the third mounting hole (3036), each fourth via hole (3043) corresponds to a third via hole (3033); each insulating member (3051) is received in a respective first mounting hole (3013) , each fifth mounting hole (3053) and corresponds to a second mounting hole (3021); the second adhesive layer (306) is adhered to the bottom surface (3012), each sixth mounting hole (3061) corresponds to a fifth mounting hole (3053), each fifth via hole (3063) corresponds to a first via hole (3015); the second copper foil (307) is adhered to the second adhesive layer (306), each seventh mounting hole (3076) corresponds to the sixth mounting hole (3061), each sixth via hole (3073) correspond to a fifth via hole (3063); the second dielectric layer (308) is coated on the second copper foil (307), each eight mounting hole (3081) corresponds to the seventh mounting hole (3076), each seventh via hole (3083) corresponds to a sixth via hole (3073).

2. The current collecting board of claim 1, wherein the copper plate (301) is electrically connected to the first main portion (3031) and the second main portion (3071) by the first via holes (3015), the second via holes (3023), the third via holes (3033), the fourth via holes (3043), the fifth via holes (3063), the sixth via holes (3073), and the seventh via holes 3083; each contact potion (3035) is electrically connected to a respective contact plate (3075) by the second mounting holes (3021), the third mounting holes (3036), the fourth mounting holes (3041), the fifth mounting holes (3053), the sixth mounting holes (3061), the seventh mounting holes (3076), and eighth mounting holes (3081).

3. The current collecting board of claim 1, wherein the first mounting holes (3013) and the first via holes (3015) are arranged in a matrix and every two pairs of first via holes (3015) being positioned at two sides of each first mounting hole (3013); the second mounting holes (3021) and the second via holes (3023) are arranged in a matrix and every two pairs of second via holes (3023) being positioned at two sides of each second mounting hole (3021); the third via holes (3033) are arranged in matrix and every two pairs of the third via holes (3033) are positioned at two side of each first isolate hole (3034); the fourth mounting holes (3041) and the fourth via holes (3043) are arranged in matrix and every two pairs of fourth via holes (3043) being positioned at two sides of each fourth mounting hole (3041); the sixth mounting holes (3061) and the fifth via holes (3063) are arranged in matrix and every two pairs of fifth via holes (3063) being positioned at two sides of each sixth mounting hole (3061); the sixth via holes (3073) are arranged in matrix and every two pairs of the sixth via holes (3073) are positioned at two sides of each second isolate hole (3074); the eight mount holes (3081) and the seventh via holes (3083) are arranged in matrix and every two pairs of seventh via holes (3083) being positioned at two sides of each eighth mounting hole (3081).

4. The current collecting board of claim 2, wherein the first adhesive layer (302) defines a number of first through holes (3024); each contact portion (3035) defines a pair of second through holes (3037), each second through hole (3037) corresponds a first through hole (2034); the first dielectric layer (304) defines a number of third through holes (3044) and each third through hole (3044) corresponds to second through hole (3037); each insulating member (3051) defines a pair of fourth through holes (3054), each fourth through hole (3054) corresponds to a first through hole (3024); the second adhesive layer (306) defines a number of fifth through holes (3064) and each fifth through hole (3064) corresponds to a fourth through hole (3054); each contact plate (3075) defines a pair of sixth through holes (3077), each sixth through hole (3077) corresponds to a fifth through hole (3064); the second dielectric layer (308) defines a number of seventh through holes (3084), each seventh through hole (3084) corresponds to the sixth through hole (3077); each contact potion (3035) is also electrically connected to a respective contact plate (3075) by the first through holes (3024), the second through holes (3037), the third through holes (3044), the fourth through holes (3054), the fifth through holes (3064), the sixth through holes (3077), and the seventh through holes (3084).

5. The current collecting board of claim 1, wherein the first dielectric layer (304) defines a number of first exposing holes (3045) and a number of second exposing holes (3046); each first exposing hole (3045) corresponds to a respective fusing arm (3038), each fusing arm (3038) is exposed outside through a respective first exposing hole (3045); every two second exposing holes (3046) are positioned at two sides of each first exposing hole (3045), each contact portion (3035) is partly exposed outside through the every two respective second exposing hole (3046).

6. The current collecting board of claim 5, wherein a size of the fourth mounting holes (3041) is greater than a size of the third mounting hole (3036) and each contact portion (3035) is also partly exposed outside through a respective fourth mounting hole (3041).

7. The current collecting board of claim 5, wherein a width of the fusing arm (3038) is smaller than a width of the first contact portion (3035); the first main portion (3031), the first contact portions (3035), and the fusing arms (3038) are integrated formed.

8. The current collecting board of claim 1, wherein the copper plate (301) define a number of first heat dissipation holes (3014), the first adhesive layer (302) defines a number of second heat dissipation holes (3022) and each second heat dissipation hole (3022) corresponds to a first heat dissipation hole (3014); the first main portion (3031) defines a number of third heat dissipation holes (3032), each third heat dissipation hole (3032) corresponds a second heat dissipation hole (3022); the first dielectric layer (304) defines a number of fourth heat dissipation holes (3042) and each fourth heat dissipation hole (3042) corresponds to a third heat dissipation hole (3032); the second adhesive layer (306) defines a number of fifth heat dissipation holes (3062) and each fifth heat dissipation hole (3062) corresponds to a first heat dissipation hole (3014); the second main portion (3071) defines number of sixth heat dissipation holes (3072) and each sixth heat dissipation hole (3072) corresponds to a fifth heat dissipation hole (3062); the second dielectric layer (308) defines a number of seventh heat dissipation holes (3082) and each seventh heat dissipation hole (3082) corresponds to the sixth heat dissipation hole (3072).

9. The current collecting board claim 1, wherein the epoxy resin layer (305) comprises an annular frame (3052) surrounding the insulating members (3051); the annular frame (3052) is coated on the bottom surface (3012) of the copper plate (301), the second adhesive layer (306) is surrounded by the annular frame (3052).

10. The current collecting board claim 4, wherein the first mounting hole (3015) comprises a first part (3016) and a second part (3017), the first part (3016) is circular and the fourth mounting hole (3041) corresponds to the first part (3016); the pair of fourth through hole (3054) corresponding to the second part (3017) of the first mounting hole (3014).

11. A power battery assembly (100), comprising,
a number of single batteries (10) having a first end (11) and a second end (12) connected with connecting poles respectively, a number of printed circuit boards (20), a current collecting board (30), an anode electrode board (40), and a cathode electrode board (50);
wherein the single batteries are arranged in a first half (101) and a second half (102); the first end (11) of the single battery (10) of the first half (101) is opposite to the first end (11) of the single battery (10) of the second half (102); the first half (101) comprises several first groups (1011), each first group (1011) is neighbor to another first group (1011); the first groups (1011) comprises a first front group (1012), a first rear group (1013), and many first middle groups (1014) positioned between the first front group (1012) and the first rear group (1013); the second half (102) comprises several second groups (1021), each second group (1021) is neighbor to another second group (1021) and each second group (1021) is at one side of a first group (1011); the second groups (1021) comprises a second front group (1022), a second rear group (1023), and many second middle groups (1024) positioned between the second front group (1022) and the second rear group (1023);
wherein each printed circuit board (20) is positioned between two neighbored first middle groups (1014) and two neighbored second middle groups (1024), each connecting pole (13) of the first end (11) of the single battery (10) in the first front group (1012) is electrically connected to the anode electrode board (40), each connecting pole (13) of the second end (12) of the single battery (10) in the first front group (1012) is electrically connected a printed circuit board (20); each connecting pole (13) of the second end (12) of the single battery (10) in the second front group (1022) is electrically connected to the cathode electrode board (50), each connecting pole (13) of the first end (11) of the single battery (10) in the second front group (1022) is electrically connected the printed circuit board (20) which the first front group (1012) connected to; each connecting pole (13) of the second end (10) of the single battery (10) in the first rear group (1013) is electrically connected to the current collecting board (30), each connecting pole (13) of the first end (11) of the single battery (10) in the first rear group (1013) is electrically connected another printed circuit board (10); each connecting pole 13 of the first end (11) of the single battery (10) in the second rear group (1023) is electrically connected to the current collecting board (30), each connecting pole (13) of the second end (12) of the single battery (10) in the second rear group (1023) is electrically connected the another printed circuit board (20);
wherein connecting poles (13) of each single battery in each first middle group (1014) are electrically connected to two printed circuit boards (20) and connected to connecting poles (13) of the single battery (10) of neighbored first middle groups (1014) in series; connecting poles of each single battery (10) in each second middle group (1024) are electrically connected to two printed circuit boards (20) and connected to connecting poles (13) of the single battery (10) of neighbored second middle groups (1024) in series; the anode electrode board (40) and the cathode electrode board (50) and are positioned at the same side of the power battery assembly (100), the current collecting board (30) is positioned opposite to the anode electrode board (40) and the cathode electrode board (50) and connects the first groups (1011) and the second groups (1021) in series;
wherein current collecting board (30) comprises:
a copper plate (301) comprising a top surface (3011) and a bottom surface (3012) and defining a number of first mounting holes (3013) and a number of first via holes (3015);
a first adhesive layer (302) defining a number of second mounting holes (3021) and a number of second via holes (3023);
a first copper foil (303) comprising a first main portion (3031), a number of contact portions (3035) and a number of fusing arms (3038), the first main portion (3031) defining a number of third via holes (3033) and a number of first isolate holes (3034); each first isolate hole (3034) surrounding a respective contact portion (3035) and each contact portion (3035) defining a third mounting hole (3036); each fusing arm (3038) connecting a respective first contact portion (3035) and the first main portion (3031);
a first dielectric layer (304) defining a number of fourth mounting holes (3041) and a number of fourth via holes (3043);
an epoxy resin layer (305) comprising a number of insulating members (3051), each insulating member (3051) being received in a respective first mounting hole (3013) and defining a fifth mounting hole (3053);
a second adhesive layer (306) defining a number of six mounting holes (3061) and a number of fifth via holes (3063);
a second copper foil (307) comprising a second main portion (3071) and a number of contact plates (3075), the second main portion (3071) defining a number of sixth via holes (3073) and a number of second isolate holes (3074); each contact plate (3075) being received in a respective second isolate hole (3074) and separated from the second main portion (3071) by the second adhesive layer (306), each contact plate (3075) defining a seventh mounting hole (3076); and
a second dielectric layer (308) defining a number of eighth mounting holes (3081) and a number of seventh via holes (3083);
wherein the first adhesive layer (302) is adhered to the top surface (3011), each second mounting hole (3021) corresponds to a respective first mounting hole (3013), each second via hole (3023) corresponds to a first via hole (3015); the first copper foil (303) is adhered to the first adhesive layer (302), each third mounting hole (3036) corresponds to the second mounting hole (3021), each third via hole (3033) corresponds to a second via hole (3023); the first dielectric layer (304) is coated on the first copper foil (303), each fourth mounting hole (3041) corresponds to the third mounting hole (3036), each fourth via hole (3043) corresponds to a third via hole (3033); each insulating member (3051) is received in a respective first mounting hole (3013), each fifth mounting hole (3053) and corresponds to a second mounting hole (3021); the second adhesive layer (306) is adhered to the bottom surface (3012), each sixth mounting hole (3061) corresponds to a fifth mounting hole (3053), each fifth via hole (3063) corresponds to a first via hole (3015); the second copper foil (307) is adhered to the second adhesive layer (306), each seventh mounting hole (3076) corresponds to the sixth mounting hole (3061), each sixth via hole (3073) correspond to a fifth via hole (3063); the second dielectric layer (308) is coated on the second copper foil (307), each eight mounting hole (3081) corresponds to the seventh mounting hole (3076), each seventh via hole (3083) corresponds to a sixth via hole (3073).

12. The power battery assembly of claim 11, wherein the anode electrode board (40) comprises a first substrate portion (401), the first substrate portion (401) defines a number of first fixing holes (4011); each connecting pole (13) of the first end (11) of the single battery (10) in the first front group (1012) is received in a first fixing hole (4011); the cathode electrode board (50) comprises a second substrate portion (501), the second substrate portion (501) defines a number of second fixing holes (5011), each connecting pole (13) of the second end (12) of the single battery (10) in the second front group (1022) is received in a second fixing hole (5011).

13. The power battery assembly of claim 12, wherein each connecting pole (13) of the second end (12) of the single battery (10) in the first rear group (1013) is received in a second mounting hole (3014) to eight mounting hole (3081); each connecting pole (13) of the first end (11) of the single battery (11) in the second rear group (1023) is received in a corresponding second mounting hole (3014) to eight mounting hole (3081).

14. The power battery assembly of claim 13, wherein each printed circuit board defines a number of connecting holes (203), connecting poles (13) of each single battery (10) in each first middle group (1014) pass the connecting holes (203) of two printed circuit boards (20); connecting poles (13) of each single battery (10) in each second middle group (1024) passes the connecting holes (203) of two printed circuit boards (20).

15. The power battery assembly of claim 11, wherein the anode electrode board (40) comprises a first ear portion (402) extending from one side of the first substrate portion (401); the first ear portion (402) is perpendicular to the first substrate portion (401) and defines two first assembling holes (4021); the cathode electrode board (50) comprises a second ear portion (502) extending from one side of the second substrate portion (501); the second ear portion (502) is perpendicular to the second substrate portion (501) and defines two second assembling holes (5021).

16. The power battery assembly of claim 11, wherein the first mounting holes (3013) and the first via holes (3015) are arranged in a matrix and every two pairs of first via holes (3015) being positioned at two sides of each first mounting hole (3013); the second mounting holes (3021) and the second via holes (3023) are arranged in a matrix and every two pairs of second via holes (3023) being positioned at two sides of each second mounting hole (3021); the third via holes (3033) are arranged in matrix and every two pairs of the third via holes (3033) are positioned at two side of each first isolate hole (3034); the fourth mounting holes (3041) and the fourth via holes (3043) are arranged in matrix and every two pairs of fourth via holes (3043) being positioned at two sides of each fourth mounting hole (3041); the sixth mounting holes (3061) and the fifth via holes (3063) are arranged in matrix and every two pairs of fifth via holes (3063) being positioned at two sides of each sixth mounting hole (3061); the sixth via holes (3073) are arranged in matrix and every two pairs of the sixth via holes (3073) are positioned at two sides of each second isolate hole (3074); the eight mount holes (3081) and the seventh via holes (3083) are arranged in matrix and every two pairs of seventh via holes (3083) being positioned at two sides of each eighth mounting hole (3081).

17. The power battery assembly of claim 16, wherein the first adhesive layer (302) defines a number of first through holes (3024); each contact portion (3035) defines a pair of second through holes (3037), each second through hole (3037) corresponds a first through hole (2034); the first dielectric layer (304) defines a number of third through holes (3044) and each third through hole (3044) corresponds to second through hole (3037); each insulating member (3051) defines a pair of fourth through holes (3054), each fourth through hole (3054) corresponds to a first through hole (3024); the second adhesive layer (306) defines a number of fifth through holes (3064) and each fifth through hole (3064) corresponds to a fourth through hole (3054); each contact plate (3075) defines a pair of sixth through holes (3077), each sixth through hole (3077) corresponds to a fifth through hole (3064); the second dielectric layer (308) defines a number of seventh through holes (3084), each seventh through hole (3084) corresponds to the sixth through hole (3077); each contact potion (3035) is also electrically connected to a respective contact plate (3075) by the first through holes (3024), the second through holes (3037), the third through holes (3044), the fourth through holes (3054), the fifth through holes (3064), the sixth through holes (3077), and the seventh through holes (3084).

18. The power battery assembly of claim 11, wherein the first dielectric layer (304) defines a number of first exposing holes (3045) and a number of second exposing holes (3046); each first exposing hole (3045) corresponds to a respective fusing arm (3038), each fusing arm (3038) is exposed outside through a respective first exposing hole (3045); every two second exposing holes (3046) are positioned at two sides of each first exposing hole (3045), each contact portion (3035) is partly exposed outside through the every two respective second exposing hole (3046).
